# EUROPEAN PATENT APPLICATION

(11) **EP 1 186 975 A2**
(43) Date of publication of application: **13.03.2002**
(21) Application number: 01121493.9
(22) Date of filing: 07.09.2001
(51) Int. Cl.: G05B 19/4063, B23Q 17/00, B23Q 41/08

(54) **Machine tool maintenance system**

(30) Priority: 07.09.2000 JP 2000270963
(71) Applicant: Mori Seiki Co., Ltd., Yamatokoriyama-shi, Nara 639-1160 (JP)
(72) Inventor: Moriuchi, Takashi, c/o Mori Seiki co., Ltd., Yamatokoriyama-shi, Nara 639-1160 (JP)
(74) Representative: Reinhard - Skuhra - Weise & Partner

(57) **Abstract**

The present invention relates to a machine tool maintenance system, which evaluates and controls the static and/or dynamic characteristics by operating the machine, whereby the static and/or dynamic characteristics of the machine tool 20 can be evaluated and controlled at a user side, and in addition, preventive measures can be taken based on the obtained results of evaluations. This maintenance system 1 comprises acceleration sensor 11a and the like for detecting the static and/or dynamic conditions of the machine tool 20, reference value storage section 34 for storing reference values that are set in advance as standard conditions of the machine tool 20, judgement section 37 for evaluating the static and/or dynamic characteristics of the machine tool 20 and judging whether or not the characteristics are acceptable based on detection signals detected by the acceleration sensor 11a and the like and the reference values stored in the reference value storage section 34, and output controller 33 for outputting the results of judgement obtained by the judgement section 37 to output device 40.

## Description

### BACKGROUND OF THE INVENTION

### Field of the Invention

The present invention relates to a maintenance system for evaluating and controlling the static and/or dynamic characteristics of a machine tool having a main spindle unit and a feeder in trial operation of the machine tool.

### Description of the Prior Art

Usually, the static and dynamic characteristics of a machine tool are measured by a manufacturer who manufactured the machine tool, and when the measured characteristics satisfy predetermined reference values, the machine tool is delivered to a user.

The characteristics of a machine tool to be evaluated include, for example, the rotational accuracy of the main spindle, the temperature distribution characteristic of the structure of the machine tool, the thermal displacement characteristic according to the temperature distribution, the vibration characteristic of the structure, and the noise characteristic caused by vibration. Normally, the abovementioned measurements are made by using various sensors such as a rotation sensor, temperature sensor, acceleration sensor, displacement sensor, and noise meter.

The accuracy of each portion of a machine tool deteriorates in proportion to use, and as a result, the machining accuracy lowers over time. For example, the bearing supporting the main spindle wears over time and the temperature at the same portion rapidly increases, and vibrations also increase. Therefore, to maintain an excellent machining accuracy, it is desired that the user side periodically evaluates the characteristics, and when the characteristics exceed allowable ranges, it is desired that a proper measure such as parts replacement is taken.

However, conventionally, in many cases, since users do not have proper inspection devices for evaluating the characteristics of the machine tool and do not have information for evaluation of the characteristics either, users have not made the abovementioned evaluation. For the abovementioned evaluation, inspection of many items is necessary, so that the inspection work is very troublesome. This is one of the causes for users reluctance to conduct periodic inspections.

The invention is made in view of the abovementioned circumstances, and the object thereof is to provide a machine tool maintenance system by which the static and/or dynamic characteristics of a machine tool can be evaluated and controlled, and also, preventive measures can be taken from the results of the evaluation.

### SUMMARY OF THE INVENTION

In order to solve the abovementioned problems, the maintenance system of the invention, which evaluates and controls the static and/or dynamic characteristics of a machine tool having a main spindle unit and a feeder in trial operation of the machine tool, the machine tool maintenance system comprises:
a sensor for detecting the static and/or dynamic conditions of the machine tool;
a reference value storage section for storing predetermined reference values indicative of standard conditions of the machine tool;
a judgement section for evaluating the static and/or dynamic characteristics of the machine tool on the basis of a detection signal detected by the sensor and the reference values stored in the reference value storage section for judgement on the acceptability of the characteristics; and
an output device for outputting a judgement result obtained by the judgement section.

According to the invention, during operation and/or suspension in trial operation of the machine tool, the condition of the respective portions are detected by the sensor, and the judgement section evaluates the static and/or dynamic characteristics of the machine tool based on the results of detection of the sensor and the reference values stored in the reference value storage section to judge whether or not the characteristics are acceptable. Then, the results of judgement made by the judgement section are outputted from the output device.

Thus, according to the invention, automatic evaluation and judgement of the static and/or dynamic characteristics of a machine tool can be made, so that the troublesome work for characteristic evaluation becomes unnecessary. Therefore, the user can easily make evaluation of the characteristics of a machine tool, so that periodic evaluation of the characteristics can be made.

Furthermore, the abovementioned characteristics include the rotation accuracy of the main spindle, the temperature increase characteristic of the structure of the machine tool and the thermal displacement characteristic in accordance with the temperature increase, the vibration characteristic of the structure, and the noise characteristic caused by vibration, and the sensor may include at least one or more of a rotation sensor for detecting the number of rotations of the main spindle of the main spindle unit, a temperature sensor for detecting the temperature of the machine tool, an acceleration sensor for detecting the acceleration acting on the machine tool, a displacement sensor for detecting displacement of a predetermined portion of the machine tool, and a noise meter for detecting noise caused by the machine tool.

Furthermore, the above mentioned maintenance system may be provided with a judgement result storage section for storing the results of judgement made by the judgement section. Thereby, all results of periodic evaluations and judgements of the characteristics of the machine tool can be stored in the judgement result storage section. Therefore, time-related characteristic changes of the machine tool can be observed, whereby the future conditions of the machine tool can be estimated, and preventive measures can be taken.

Furthermore, the above mentioned maintenance system may be provided with an estimate section for estimating future static and/or dynamic characteristics of the machine tool based on the results of judgement stored in the judgement result storage section. Thereby, future conditions of the machine tool can be automatically estimated, so that the user can take preventive measures such as keeping stock of replacement parts and repairs before failures.

Furthermore, the above mentioned maintenance system may be provided with a drive signal generator, which generates drive control signals for a trial operation of the main spindle unit and/or feeder and outputs the generated drive control signals to the machine tool. Thereby, the main spindle unit and/or feeder can be driven for a trial by drive signals caused by the drive signal generator. Therefore, when evaluating the characteristics, it is not necessary to operate the machine tool, and the evaluation efficiency can be improved.

### BRIEF DESCRIPTION OF THE DRAWINGS

Fig. 1 is a block diagram showing a machine tool maintenance system relating to an embodiment of the invention;
Fig. 2 is a graph showing an example of the results of measurement in the maintenance system of the embodiment; and
Fig. 3 is an explanatory view showing an example of data to be outputted to an output device relating to the embodiment.

### DESCRIPTION OF THE PREFERRED EMBODIMENT

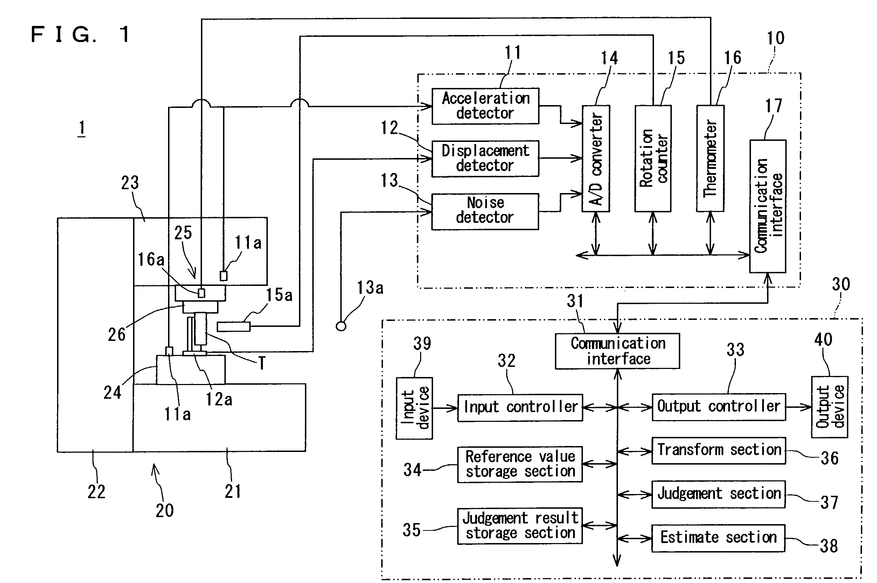

Hereinafter, a concrete embodiment of the invention is explained with reference to the attached drawings. Fig. 1 is a block diagram showing a machine tool maintenance system relating to the embodiment of the invention.

As shown in Fig. 1, the maintenance system 1 of the present embodiment comprises an inspection device 10 which detects the static and dynamic conditions of the machine tool 20 in trial operation of the machine tool 20, and a control unit 30 which receives data detected by the inspection device 10 and evaluates and controls the static and dynamic characteristics of the machine tool 20. This maintenance system 1 is constructed so as to be transportable although the construction is not illustrated.

The machine tool 20 of the present embodiment is called a vertical machining center, which comprises bed 21, column 22, main spindle head 23 that is supported by this column 22 and movable upward and downward, and main spindle unit 25 that has a main spindle 26, and rotates the main spindle 26 about the axis center, table 24 that is disposed on the bed 21 so as to be movable horizontally, a feeder (not shown) for moving the table 24, and a control unit for controlling the operations of these. The trial operation of this machine tool 20 is carried out by rotating the main spindle 26 while the main spindle 26 holds the test tool T.

The inspection device 10 comprises acceleration sensors 11a mounted to the main spindle head 23 and table 24, acceleration detector 11 connected to the acceleration sensors 11a, displacement sensor 12a disposed on the table 24 in a condition where the sensor faces the test tool T, a displacement detector 12 connected to this displacement sensor 12a, microphone 13a disposed near the machine tool 20, noise detector 13 connected to this microphone 13a, A/D converter 14 connected to the acceleration detector 11, the displacement detector 12 and noise detector 13, rotation sensor 15a disposed so as to face the test tool T, rotation counter 15 connected to this rotation sensor 15a, temperature sensors 16a mounted to a coolant supply source (not shown) and the main spindle unit 25 of the machine tool 20, thermometer 16 connected to this temperature sensors 16a, and communication interface 17.

The acceleration sensors 11a are respectively adapted to detect the accelerations acting on the main spindle head 23 and table 24, and the acceleration detector 11 outputs an analog signal according to the accelerations detected by the acceleration sensors 11a. The displacement sensor 12a is a sensor for detecting the amount of relative displacement between the table 24 and test tool T, and the displacement detector 12 outputs an analog signal according to the amount of displacement detected by this displacement sensor 12a. The microphone 13a detects a noise level caused by the machine tool 20, and the noise detector 13 outputs an analog signal according to the noise level detected by the microphone 13a. The analog signals outputted from the acceleration detector 11, the displacement detector 12 and noise detector 13 are converted into digital signals by the A/D converter 14, and the converted digital signals are transmitted to the control unit 30 via the communication interface 17.

The rotation sensor 15a irradiates light onto the test tool T, receives light reflected from the test tool T, and outputs a pulse signal with a number of pulses according to the number of rotations of the test tool T, and the rotation counter 15 calculates the number of rotations per minute of the test tool T based on the pulse signal received from the rotation sensor 15a, and outputs the calculated number of rotations as digital data. The temperature sensors 16a are respectively comprised of a thermocouple for outputting a thermal electromotive force according to the temperature, and the thermometer 16 converts the thermal electromotive forces inputted from the temperature sensors 16a into digital data and outputs it. Then, the data outputted from the rotation counter 15 and thermometer 16 is transmitted to the control unit 30 via the communication interface 17.

The control unit 30 is comprised of communication interface 31, input controller 32, output controller 33, reference value storage section 34, judgement result storage section 35, transform section 36, judgement section 37, estimate section 38, input device 39 and output device 40, and the communication interface 31 is connected to the communication interface 17 so as to make communications possible between the control unit 30 and inspection device 10.

In the reference value storage section 34, reference values of acceleration acting on the main spindle head 23 and table 24, temperature of the main spindle unit 25, amount of relative displacement between the table 24 and main spindle 26, noise level caused by the machine tool 20, and number of rotations of the main spindle 26, that are predetermined as standard conditions of the machine tool 20, are stored, and these reference values are stored in the reference value storage section 34 from the input device 39 via the input controller 31.

The transform section 36 executes processing to transform data received from the rotation counter 15, thermometer 16, acceleration detector 11, displacement detector 12, and noise detector 13 into measurement data that can be compared with the reference values. Concretely, the thermal electromotive force data from the thermometer 16 is transformed into temperature data, and acceleration data from the acceleration detector 11 is subjected to multiple integral processing (transformation of acceleration into displacement), fast Fourier transform (displacement frequency spectral transform), and rotation synchronous component extraction processing in order to obtain displacement data including only the extracted rotation frequency components of the main spindle 26. Furthermore, the rotation number data from the rotation counter 15 and the displacement data from the displacement detector 12 are subjected to average processing (arithmetic mean of a plurality of data) to eliminate noise, and the data from the noise detector 13 is subjected to logarithmic transformation processing to be noise data at dB units. This transform section 36 executes smoothing for the data obtained after the abovementioned processings, and after this smoothing, each data is transmitted to the judgement section 37.

The judgement section 37 compares each data received from the transform section 36 with the reference values stored in the reference value storage section 34 to judge whether or not each item is acceptable. Then, each piece of data received from the transform section 36 and the results of the judgement are stored in the judgement result storage section 35. Thus, results of inspections and evaluations that are occasionally or periodically carried out are stored in the judgement result storage section 35 successively with elapse of time.

The estimate section 38 estimates future characteristics of the machine tool 20 based on the results of inspections and evaluations stored in the judgement result storage section 35 successively with elapse of time. For example, by observing changes over time in the inspection data of each item, that is, by calculating the rate of change over time, it can be estimated that the characteristics relating to the items deviate from the reference values based on the calculated rate of change. The estimate section 38 estimates future characteristics of the machine tool 20 by such a method and stores the results of estimation in the judgement result storage section 35.

The output controller 33 is a processor for outputting data to the output device 40, and in response to a request from the input device 39, outputs each data stored in the judgement result storage section 35 to the output device 40.

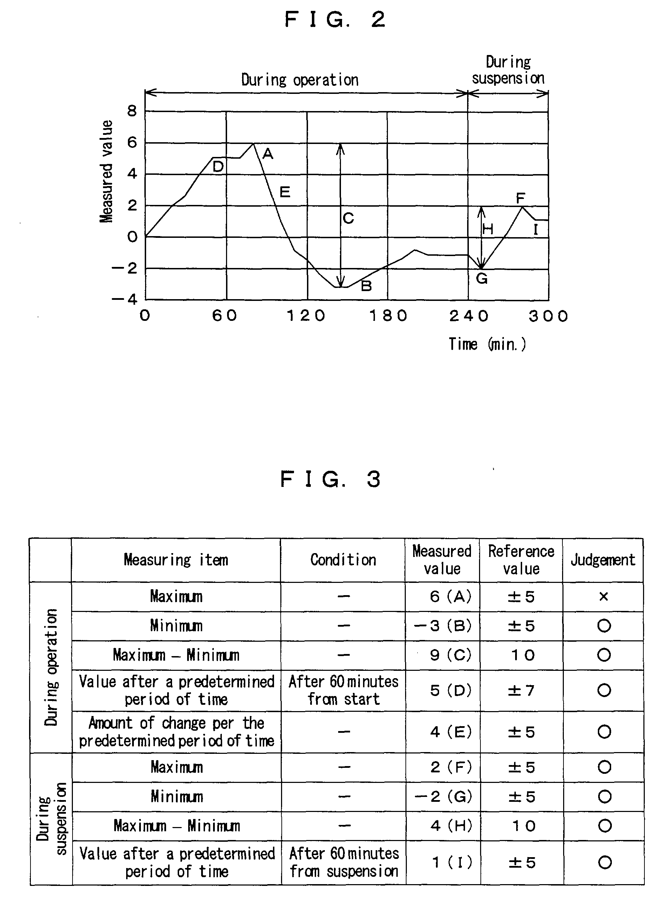

Examples of the results of evaluation to be outputted to the output device 40 are shown in Fig. 2 and Fig. 3. Fig. 2 shows a graph of the measurement data stored in the judgement result storage section 35, and the horizontal axis of the graph shows time (min.) and the vertical axis shows measured values. Fig. 3 shows a table of the measured values during operation and suspension of the machine tool 20 regarding measuring items properly set, the reference values, and the results of judgement, and in this table, A through I corresponds to the A through I shown in Fig. 2. The numerical values on the vertical axis of the graph in Fig. 2 and the measured values in Fig. 3 are temporary values set for explanation, and are not actually measured values.

According to maintenance system 1 of the present embodiment that is thus constructed, based on the measurement data collected from a number of detectors including the acceleration detector 11 and others and the reference values stored in the reference value storage section 34, the judgement section 37 automatically evaluates the static and/or dynamic characteristics of the machine tool 20 and further automatically judges whether or not the characteristics are acceptable, so that troublesome works for characteristic evaluation are not necessary, and therefore, the user can easily make evaluation of the characteristics of the machine tool 20, and periodic evaluations of the characteristics can be carried out.

Furthermore, since future characteristics of the machine tool 20 are estimated by the estimate section 38, based on the results of estimation, preventive measures such as keeping stock of replacement parts and repairs before failures can be taken, whereby deterioration of the machining accuracy and failures of the machine tool that may occur in the future can be prevented.

An embodiment of the invention is explained above, however, needless to say, the invention is not limited to this. For example, the maintenance system 1 of this embodiment may be provided with a drive signal generator which generates a drive control signal for a trial operation of the main spindle unit 25 and transmits the generated drive control signal to the machine tool 20. By such a construction, the main spindle unit 25 of the machine tool 20 can be operated for a trial in accordance with a drive signal generated by the drive signal generator. Therefore, when the characteristics are evaluated, it is not necessary to operate the machine tool 20, so that the evaluation efficiency can be improved.

In the above embodiment, the characteristics of the machine tool 20 are evaluated upon a trial operation by rotating the main spindle 26, however, the characteristics of the machine tool 20 may be evaluated upon a trial operation by moving the table 24. The machine tool 20 to which the invention can be applied is not limited to the abovementioned machining center.

The maintenance system 1 of the present embodiment is not efficiently used at only the user side, but also is efficiently used at the manufacturer side, of course.

## Claims

1. A machine tool maintenance system (1) for evaluating and controlling the static and/or dynamic characteristics of a machine tool (20) having a main spindle unit (25) and a feeder in trial operation of the machine tool (20), the machine tool maintenance system (1) comprising:
a sensor (11a,12a,13a,15a,16a) for detecting the static and/or dynamic characteristics of the machine tool (20);
a reference value storage section (34) for storing predetermined reference values indicative of standard conditions of the machine tool (20);
a judgement section (37) for evaluating the static and/or dynamic characteristics of the machine tool (20) on the basis of a detection signal detected by the sensor (11a,12a,13a,15a,16a) and the reference values stored in the reference value storage section (34) for judgement on the acceptability of the characteristics; and
an output device (40) for outputting a judgement result obtained by the judgement section (37).

2. A machine tool maintenance system (1) according to Claim 1, wherein the sensor includes at least one of a rotation sensor (15a) for detecting the number of rotations of the main spindle (26), temperature sensor (16a) for detecting the temperature of the machine tool (20), acceleration sensor (11a) for detecting the acceleration acting on the machine tool (20), displacement sensor (12a) for detecting displacement of a predetermined portion of the machine tool (20), and a noise meter (13a) for detecting noise caused by the machine tool (20).

3. A machine tool maintenance system (1) according to Claim 1 or 2, further comprising a judgement result storage section (35) for storing the judgement result obtained by the judgement section (37).

4. A machine tool maintenance system (1) according to Claim 3, further comprising an estimate section (38) for estimating future static and/or dynamic characteristics of the machine tool (20) based on the judgement result stored in the judgement result storage section (35).

5. A machine tool maintenance system (1) according to any one of Claims 1 through 4, further comprising a drive signal generator which generates a drive control signal to operate the main spindle unit (25) and/or feeder for a trial and transmits the generated drive control signal to the machine tool (20).
